# EUROPEAN PATENT SPECIFICATION

(11) **EP 1 276 961 B1**
(45) Date of publication and mention of the grant of the patent: **15.09.2004**
(21) Application number: 01943287.1
(22) Date of filing: 24.04.2001
(51) Int. Cl.: E21B 43/00

(54) **METHOD FOR TREATING A HYDROCARBON-CONTAINING FORMATION**
VERFAHREN ZUR BEHANDLUG VON ERDÖLLAGERSTÄTTEN
PROCEDE DE PRODUCTION D'HYDROCARBURES ET DE GAZ DE SYNTHESE A PARTIR D'UNE FORMATION CONTENANT DES HYDROCARBURES

(30) Priority: 24.04.2000 US 199214 P; 24.04.2000 US 199213 P; 24.04.2000 US 199215 P
(43) Date of publication of application: 22.01.2003
(73) Proprietor: SHELL INTERNATIONALE RESEARCH MAATSCHAPPIJ B.V., 2596 HR Den Haag (NL)
(72) Inventor: VINEGAR, Harold, J., Houston, TX 77096 (US); WELLINGTON, Scott, Lee, Bellaire, TX 77401 (US); DE ROUFFIGNAC, Eric, Houston, TX 77005 (US); BERCHENKO, Ilya, Emil, Friendswood, TX 77546 (US); MAHER, Kevin, Albert, Bellaire, TX 77401 (US); ZHANG, Etuan, Houston, TX 77096 (US)
(86) International application number: PCT/EP2001/004669
(87) International publication number: WO 2001/081717

(56) References cited:
- US-A- 2 914 309
- US-A- 3 986 349
- US-A- 4 067 390
- US-A- 4 344 483

## Description

The present invention relates to a method for production of hydrocarbons and carbon monoxide and/or hydrogen from various hydrocarbon-containing formations.

Hydrocarbon containing materials obtained from subterranean formations are often used as energy resources, as feedstocks, and as consumer products. Concerns over depletion of available hydrocarbon resources have led to development of processes for more efficient recovery, processing and/or use of available hydrocarbon resources. In situ processes may be used to remove hydrocarbon materials from subterranean formations. Chemical and/or physical properties of hydrocarbon material within a subterranean formation may need to be changed to allow hydrocarbon material to be more easily removed from the subterranean formation. The chemical and physical changes may include in situ reactions that produce removable fluids, solubility changes, phase changes, and/or viscosity changes of the hydrocarbon material within the formation. A fluid may be, but is not limited to, a gas, a liquid, an emulsion, slurry and/or a stream of solid particles that has flow characteristics similar to liquid flow.

Application of heat to oil shale formations is described in US-A-2923535 and US-A-4886118. Heat is applied to the oil shale formation to pyrolyze kerogen within the oil shale formation. The heat may also fracture the formation to increase permeability of the formation. The increased permeability may allow formation fluid to travel to a production well where the fluid is removed from the oil shale formation. In the process of US-A-2923535 an oxygen containing gaseous medium is introduced to a permeable stratum, preferably while still hot from a preheating step, to initiate combustion in order to produce more hydrocarbon vapours and liquid products. US-A-4,344,483 describes the method according to the preamble of claim 1.

A part of the initial total organic carbon content the hydrocarbon containing formation, or the portion thereof subjected to pyrolysis may be transformed into hydrocarbon fluids. It is evident that after the pyrolysis of the kerogen, hot carbonaceous material remains in the formation. It has now been found that such heated formations can be used to produce synthesis gas.

Accordingly, the present invention provides a method for the production of synthesis gas from a hydrocarbon-containing subterranean formation comprising:
providing heat to at least a portion of the subterranean formation such that at least a part of the heated portion reaches the pyrolysis temperature of kerogen, yielding pyrolysis products;
collecting pyrolysis products from the subterranean formation;
injecting a synthesis gas-generating component into the heated part of the formation, resulting in the production of synthesis gas by reaction of the synthesis gas-generating component with carbonaceous material remaining in the formation; and
recovering synthesis gas.

Synthesis gas is generally defined as a mixture of hydrogen and carbon monoxide; it may, however, also contain additional components such as water, carbon dioxide, methane and other gases. The synthesis gas is produced from hydrocarbons remaining within the hydrocarbon containing formation. The pyrolysis tends to produce a relatively high, substantially uniform permeability throughout the hydrocarbon containing formation or the pyrolysed portion thereof. Such a relatively high, substantially uniform permeability allows the generation of synthesis gas with low injection costs and with minimum fingering and bypassing of substantial portions of the formation. The portion also has a large surface area and/or a large surface area/volume. The large surface area may allow synthesis gas producing reactions to be substantially at equilibrium conditions during synthesis gas generation. The relatively high, substantially uniform permeability can result in a relatively high recovery efficiency of synthesis gas, as compared to synthesis gas generation in a hydrocarbon containing formation, which has not been subjected to pyrolysis.
A formation can be heated to a temperature greater than 400 °C prior to contacting a synthesis gas-generating fluid with the formation. Contacting a synthesis gas generating fluid, such as water and/or carbon dioxide, with carbon and/or hydrocarbon material within the formation results in generation of synthesis gas if the temperature of carbon containing material is sufficiently high. Synthesis gas generation is generally an endothermic process. Additional heat can suitably be added to the formation during synthesis gas generation to maintain a high temperature within the formation. The heat may be added from heater wells and/or from oxidizing carbon and/or hydrocarbons within the formation. The generated synthesis gas may be removed from the formation through one or more production wells.

Synthesis gas generation can be commenced before and/or after pyrolysis product production decreases to an uneconomical level. In this manner, heat provided to pyrolyze may also be used to generate synthesis gas. For example, if a portion of the formation is at 270 °C to 375 °C after pyrolysis, then less additional heat is generally required to heat such portion to a temperature sufficient to support synthesis gas generation.

Pyrolysis of at least some hydrocarbon containing material may in some embodiments convert about 20% of carbon initially available. Synthesis gas generation may convert approximately up to an additioral 70% of carbon initially available within the portion. In this manner, in situ production of synthesis gas from a hydrocarbon containing formation may allow conversion of larger amounts of carbon initially available within the portion.

Certain embodiments include providing heat from one or more heat sources to heat to a temperature sufficient to allow synthesis gas generation. A temperature of at least a portion of a formation that is used to generate synthesis gas is suitably raised to a synthesis gas generating temperature (e.g., between 400 °C and 1200 °C). Composition of produced synthesis gas may be affected by formation temperature, and also by the temperature of the formation adjacent to synthesis gas production wells. A relatively low synthesis gas generation temperature produces a synthesis gas having a high H₂ to CO ratio, but the produced synthesis gas may also include a large portion of other gases such as water and CO₂. A relatively high formation temperature produces a synthesis gas having an H₂ to CO ratio that approaches 1, so that the stream may include mostly, and in some cases substantially only, H₂ and CO. At a formation temperature of about 620 °C, the formation may produce a synthesis gas having an H₂ to CO ratio of 2.

Heat sources for synthesis gas production include any type of heat sources as described hereinbefore. Alternatively, heating includes transferring heat from heat transfer fluid, e.g., steam or combustion products from a burner, flowing within a plurality of well bores within the formation. Heat sources and/or production wells within a formation for pyrolyzing and producing pyrolysis fluids from the formation can be utilized for different purposes during synthesis gas production. A well that was used as a heat source or a production well during pyrolysis can be used as an injection well to introduce synthesis gas producing fluid into the formation. A well that was used as a heat source or a production well during pyrolysis can be used as a production well during synthesis gas generation. A well that was used as a heat source or a production well during pyrolysis can be used as a heat source to heat the formation during synthesis gas generation. Synthesis gas production wells may be spaced further apart than pyrolysis production wells because of the relatively high, substantially uniform permeability of the formation. Synthesis gas production wells are suitably heated to relatively high temperatures so that a portion of the formation adjacent to the production is at a temperature that will produce a desired synthesis gas composition. Comparatively, pyrolysis fluid production wells may not be heated at all, or may only be heated to a temperature that will inhibit condensation of pyrolysis fluid within the production well. The spacing between heat sources may typically be within the range of from 5 m to 20 m, preferably from 8 m to 15 m.

A synthesis gas generating fluid e.g., liquid water, steam, carbon dioxide, air, oxygen, hydrocarbons, and mixtures thereof, may be provided to the formation. For example, the synthesis gas generating fluid mixture can include steam and oxygen. In an embodiment, a synthesis gas generating fluid includes water produced by pyrolysis of at least some hydrocarbon containing material within one or more other portions of the formation. Providing the synthesis gas generating fluid can alternatively include raising a water table of the formation to allow water to flow into it. Synthesis gas generating fluid can also be provided through at least one injection well bore. The synthesis gas generating fluid will generally react with carbon in the formation to form H₂, water, CO₂, and/or CO. A portion of the carbon dioxide tends to react with carbon in the formation to generate carbon monoxide. Hydrocarbons such as C₂-C₆-alkanes, e.g., ethane, can be added to a synthesis gas generating fluid. When introduced into the formation, the hydrocarbons may crack to form hydrogen and/or methane. The presence of methane in produced synthesis gas increases the heating value of the produced synthesis gas.

Synthesis gas generating reactions are typically endothermic reactions. In an embodiment, an oxidant is added to a synthesis gas generating fluid. The oxidant includes, but is not limited to, air, oxygen enriched air, oxygen, hydrogen peroxide, other oxidizing fluids, or combinations thereof. In an embodiment, it is desirable to use oxygen rather than air as oxidizing fluid in continuous production. If air is used, a drawback could be that nitrogen may need to be separated from the synthesis gas. The use of oxygen as oxidizing fluid may increase a cost of production due to the cost of obtaining substantially purer oxygen. The nitrogen byproduct obtained from an air separation plant used to produce the required oxygen can, however, be used in a heat exchanger to condense hydrocarbons from a hot vapour stream produced during pyrolysis of hydrocarbon containing material. Still, preferably the oxidant is air. The oxidant may react with carbon within the formation to exothermically generate heat. Reaction of an oxidant with carbon in the formation can result in production of CO₂ and/or CO. Introduction of an oxidant to react with carbon in the formation may economically allow raising the formation temperature high enough to result in generation of significant quantities of H₂ and CO from carbon within the formation.

Synthesis gas generation can be via a batch process or a continuous process, as is further described herein. Synthesis gas can be produced from one or more producer wells that include one or more heat sources. Such heat sources may operate to promote production of the synthesis gas with a desired composition.

Certain embodiments include monitoring a composition of the produced synthesis gas, and then controlling heating and/or controlling input of the synthesis gas generating fluid to maintain the composition of the produced synthesis gas within a desired range. For example, for certain uses the produced synthesis gas preferably has a ratio of hydrogen to carbon monoxide of about 2:1.

The synthesis gas can be generated in a wide temperature range, such as between 400 °C and 1200 °C, more typically between 600 °C and 1000 °C. At a relatively low synthesis gas generation temperature a synthesis gas may be produced which has a high H₂ to CO ratio. A relatively high formation temperature may produce a synthesis gas having an H₂ to CO ratio that approaches 1, and the stream may include mostly, and in some cases substantially only, H₂ and CO. At a formation temperature of about 700 °C, the formation may produce a synthesis gas having an H₂ to CO ratio of 2. Typically synthesis gas may be generated which has a H₂ to CO mole ratio in the range of from 1:4 to 8:1, more typically in the range of from 1:2 to 4:1, in particular in the range of from 1:1 to 2.5:1. Certain embodiments may include blending a first synthesis gas with a second synthesis gas to produce synthesis gas of a desired composition. The first and the second synthesis gases may be produced from different portions of the formation.

Certain embodiments may include blending a first synthesis gas with a second synthesis gas to produce synthesis gas of a desired composition. The first and the second synthesis gases may be produced from different portions of the formation.

Synthesis gases described herein can be used for a variety of purposes. For example, synthesis gas can be converted to heavier condensable hydrocarbons. For example, a Fischer-Tropsch hydrocarbon synthesis process can be configured to convert synthesis gas to branched and unbranched paraffins with 1 to 30 carbon atoms. Paraffins produced from the Fischer-Tropsch process may be configured to produce other products such as diesel, jet fuel, and naphtha products. The produced synthesis gas can also be used in a catalytic methanation process to produce methane. Alternatively, the produced synthesis gas may be used for production of methanol, gasoline and diesel fuel, ammonia, and middle distillates. Examples of methods for conversion of synthesis gas to hydrocarbons in a Fischer-Tropsch process are illustrated in US-A-4096163, US-A-6085512, US-A-6172124 and US-A-4594468. Examples of a catalytic methanation process are illustrated in US-A-3992148, US-A-4130575 and US-A-4133825. Examples of processes for production of methanol are illustrated in US-A-4407973, US-A-4927857, and US-A-4994093. Examples of process for producing engine fuels are illustrated in US-A-4076761, US-A-4138442, and US-A-4605680.

Produced synthesis gas can also be used to heat the formation as a combustion fuel. Hydrogen in produced synthesis gas can be used to upgrade oil. In other embodiments, produced synthesis gas is used as a feed gas for production of ammonia and urea.

Synthesis gas may also be used for other purposes. It can be combusted as fuel. Synthesis gas can be used to generate electricity, either by reducing the pressure of the synthesis gas in turbines, and/or using the temperature of the synthesis gas to make steam (and then run turbines). Synthesis gas can also be used in an energy generation unit such as a molten carbonate fuel cell or another type of fuel cell, a turbine, a boiler firebox, or a downhole gas heater. A molten carbonate fuel cell ("MCFC") uses a molten carbonate salt mixture as an electrolyte. The composition of the electrolyte can be varied. A typical electrolyte may include lithium carbonate and potassium carbonate. At an operating temperature of about 600 to 650 °C, the electrolyte is liquid and a good ionic conductor. The electrolyte can be suspended in a porous, insulating and chemically inert ceramic matrix. Produced electrical energy may be supplied to the power grid. A portion of the produced electricity is suitably used to supply energy to electrical heating elements to heat the formation. In one embodiment, the energy generation unit is a boiler firebox. A firebox includes a small refractory-lined chamber, built wholly or partly in the wall of a kiln, for combustion of fuel. Air or oxygen is supplied to the energy generation unit to oxidize the produced synthesis gas. Water produced by oxidation of the synthesis gas is advantageously recycled to the formation to produce additional synthesis gas.

The produced synthesis gas can also be used as a fuel in downhole gas heaters. Downhole gas heaters, such as a flameless combustor as disclosed herein, can be configured to heat a hydrocarbon containing formation. In this manner, a thermal conduction process is substantially self-reliant and/or substantially reduces or eliminates a need for electricity. Because flameless combustors have a thermal efficiency approaching 90%, an amount of carbon dioxide released to the environment tends to be less than an amount of carbon dioxide released to the environment from a process using fossil-fuel generated electricity to heat the hydrocarbon containing formation.

A composition of synthesis gas for use in an energy generation unit may be in the range of an H₂ to carbon monoxide ratio of about 8:1 to 12:1 (e.g., 10:1). Synthesis gas with lower H₂ to carbon monoxide ratios, however, can suitably be used for energy generation.

Certain embodiments include separating a fuel cell feed stream from fluids produced from pyrolysis of at least some of the hydrocarbon containing material within a formation. The fuel cell feed stream can include H₂ and hydrocarbons. In addition, certain embodiments may include directing the fuel cell feed stream to a fuel cell to produce electricity. The electricity generated from the synthesis gas or the pyrolysis fluids in the fuel cell can advantageously be configured to power electrical heaters, which are configured to heat at least a portion of the formation. Certain embodiments include separating carbon dioxide from a fluid exiting the fuel cell. Carbon dioxide produced from a fuel cell or a formation can be used for a variety of purposes.

In an embodiment, a portion of a formation that has been pyrolyzed and/or subjected to synthesis gas generation is allowed to cool or is cooled to form a cooled, spent portion within the formation. For example, a heated portion of a formation may be allowed to cool by transference of heat to adjacent portion of the formation. The transference of heat may occur naturally or may be forced by the introduction of heat transfer fluids through the heated portion and into a cooler portion of the formation. Alternatively, introducing water to the first portion of the formation may cool the first portion. Water introduced into the first portion may be removed from the formation as steam. The removed water may be injected into a hot portion of the formation to create synthesis gas. Cooling the formation provides certain benefits including increasing the strength of the rock in the formation, thereby mitigating subsidence, and increasing absorptive capacity of the formation.

After production of pyrolysis fluids and/or synthesis gas, fluid (e.g. carbon dioxide) may be sequestered within the formation. To store a significant amount of fluid within the formation, a temperature of the formation will often need to be less than about 100 °C. Water may be introduced into at least a portion of the formation to generate steam and reduce a temperature of the formation. The steam may be removed from the formation. The steam may be utilized for various purposes, including, but not limited to, heating another portion of the formation, generating synthesis gas in an adjacent portion of the formation, and as a steam flood in a oil reservoir. After the formation is cooled, fluid (e.g., carbon dioxide) may be pressurized and sequestered in the formation. Sequestering fluid within the formation may result in a significant reduction or elimination of fluid that is released to the environment due to operation of the in situ conversion process.

An example of a method for sequestering carbon dioxide is illustrated in US-A-5566756. Carbon dioxide is injected, suitably under pressure, into the cooled, spent portion of the formation. The injected carbon dioxide may adsorb onto hydrocarbon containing material in the formation. The carbon dioxide may be generated during pyrolysis, synthesis gas generation, and/or extraction of useful energy. Subsequent addition of water to the formation may inhibit desorption of the carbon dioxide. In an embodiment, produced formation fluids are stored in a cooled, spent portion of the formation. In some embodiments carbon dioxide is stored in relatively deep coal beds, and used to desorb coal bed methane.

The hydrocarbon containing formation can be selected from any subterranean resource that contains hydrocarbons, These formations include, coal, oil shale, tar sands, heavy hydrocarbons having a high viscosity, bitumen-containing formations and the like.

Preferably the hydrocarbon containing formation for use in this invention contains kerogen. Kerogen is composed of organic matter, which has been transformed due to a maturation process. Hydrocarbon containing formations, which include kerogen are for example coal containing formations and oil shale containing formations. Alternatively, hydrocarbon-containing formations may be treated which do not include kerogen, for example, formations containing heavy hydrocarbons (e.g., tar sands).

Hydrocarbon-containing formations may be selected for in situ treatment based on properties of at least a portion of the formation such that it leads to the production of high quality fluids from the formation. For example, hydrocarbon-containing formations, which include kerogen may be assessed or selected for treatment based on a vitrinite reflectance of the kerogen. Vitrinite reflectance is often related to the elemental hydrogen to carbon ratio of a kerogen and the elemental oxygen to carbon ratio of the kerogen. Preferably the vitrinite reflectance is in the range of from 0.2% to 3.0%, more preferably from 0.5% to 2.0%. Such ranges of vitrinite reflectance tend to indicate that relatively higher quality hydrocarbon fluids will be produced from the formation.

The hydrocarbon containing formation may be selected for treatment based on the elemental hydrogen content of the hydrocarbon containing formation. For example, a method of treating a kerogen-containing formation may typically include selecting a hydrocarbon containing formation for treatment having kerogen with an elemental hydrogen content greater than 2 weight%, in particular greater than 3 weight%, or more in particular greater than 4 weight% when measured on a dry, ash-free basis. Preferably, the hydrocarbon containing formation has kerogen with an elemental hydrogen to carbon ratio in the range of from 0.5 to 2, in particular from 0.70 to 1.7. The elemental hydrogen content may significantly affect the composition of hydrocarbon fluids produced, for example through the formation of molecular hydrogen.

Removal of hydrocarbons due to treating at least a portion of a hydrocarbon containing formation as described in any of the above embodiments may also occur on a microscopic scale. Hydrocarbons may be removed from micropores of hydrocarbon containing material within the portion due to heating. Micropores may be generally defined as pores having a cross-sectional dimension of less than about 1000 Å. In this manner, such removal of hydrocarbons may result in a substantially uniform increase in porosity within at least a selected section of the heated portion. Heating the portion of a hydrocarbon containing formation as described in any of the above embodiments may substantially uniformly increase a porosity of a selected section within the heated portion. In the context of this patent "substantially uniform porosity" means that the assessed (e.g., calculated or estimated) porosity of any selected portion in the formation does not vary by more than a factor of 10 from the assessed average porosity of such selected portion.

The hydrocarbon containing formation may be heated to a temperature at which pyrolysis can take place. The pyrolysis temperature range may include temperatures up to, for example, 900 °C. A majority of hydrocarbon fluids may be produced within a pyrolysis temperature range of from 250 °C to 400 °C, more preferably in the range of from 260 °C to 375 °C. A temperature sufficient to pyrolyse heavy hydrocarbons in a hydrocarbon containing formation of relatively low permeability may be within a range from 270 °C to 300 °C. In other embodiments, a temperature sufficient to pyrolyse heavy hydrocarbons may be within a range from 300 °C to 375 °C. If a hydrocarbon containing formation is heated throughout the entire pyrolysis temperature range, the formation may produce only small amounts of hydrogen towards the upper limit of the pyrolysis temperature range. After the available hydrogen is depleted, little hydrocarbon production from the formation may occur.

In accordance with this invention the pressure is controlled during pyrolysis and during the production of the hydrocarbon fluid from the formation. Typically, a pressure of at least 1.0 bar is applied, more typically at least 1.5 bar, in particular at least 1.8 bar. In particular, when the pyrolysis temperature is at least 300 °C, a pressure of at least 1.6 bar may be applied. The upper limit of the pressure may be determined by the structure and the weight of the overburden. Frequently, under practical conditions, the pressure is less than 70 bar, more frequently less than 60 bar or even less than 50 bar. The pressure may advantageously be controlled within a range of from 2 bar to 18 bar or 20 bar, or alternatively within a range of from 20 bar to 36 bar.

In a preferred embodiment, as indicated hereinbefore, a partial pressure of hydrogen is maintained. Typically the partial pressure is at least 0.5 bar, for example up to 20 bar, more typically in the range of from 1 bar to 10 bar, in particular in the range of from 5 bar to 7 bar. Maintaining a hydrogen partial pressure within the formation in particular increases the API gravity of produced hydrocarbon fluids and reduces the production of long chain hydrocarbon fluids.

Physical characteristics of a portion of a hydrocarbon containing formation after pyrolysis may be similar to those of a porous bed. For example, a portion of a hydrocarbon containing formation after pyrolysis may include particles having sizes of about several millimeters. Such physical characteristics may differ from physical characteristics of a hydrocarbon containing formation that may be subjected to injection of gases that burn hydrocarbon-containing material in order to heat the hydrocarbon containing material. Such gases injected into virgin or fractured formations may tend to channel and may not be uniformly distributed throughout the formation. In contrast, a gas injected into a pyrolyzed portion of a hydrocarbon containing formation may readily and substantially uniformly contact the hydrocarbon containing material remaining in the formation. In addition, gases produced by heating the hydrocarbon containing material may be transferred a significant distance within the heated portion of the formation with a minimal pressure loss. Such transfer of gases may be particularly advantageous, for example, in treating a steeply dipping hydrocarbon containing formation.

In one embodiment, injecting additional components into the formation along with steam can change a composition of the produced synthesis gas. Carbon dioxide may be provided in the synthesis gas generating fluid to substantially inhibit production of carbon dioxide produced from the formation during synthesis gas generation. The carbon dioxide may shift equilibrium of the formation of carbon dioxide from the carbon of the formation and thereby reduce the amount of carbon dioxide generated from formation carbon. The carbon dioxide can also react with carbon in the formation to generate carbon monoxide. Carbon dioxide may be separated from the synthesis gas and may be re-injected into the formation with the synthesis gas generating fluid.

A pressure of the hydrocarbon containing formation may be maintained at relatively high pressures during synthesis gas production. The pressure may range from atmospheric pressure to the lithostatic pressure of the formation. Hence, synthesis gas may be generated in a wide pressure range, for example between 1 bar and 100 bar, more typically between 2 bar and 80 bar, especially between 5 bar and 60 bar. High operating pressures may result in an increased production of H₂. High operating pressures may allow generation of electricity by passing produced synthesis gas through a turbine, and they may allow for smaller collection conduits to transport produced synthesis gas.

Synthesis gas can be produced batch-wise or by continuous injection. In batch-wise operation oxidizing fluid, such as air or oxygen, may be injected into the formation via a well bore. Oxidation of hydrocarbon containing material may heat a region of the formation. Injection of air or oxygen may continue until an average temperature of the region is at a desired temperature, e.g., between about 900 °C and about 1000 °C. Higher or lower temperatures may also be employed. A temperature gradient may be formed in region between the injection well bore and a production well bore through which synthesis gas is recovered. The highest temperature of the gradient may be located proximate to the injection well bore.

When a desired temperature is reached, or when oxidizing fluid has been injected for a desired period of time, oxidizing fluid injection may be lessened and/or ceased. A synthesis gas generating fluid, such as steam or water, may be injected into a different injection well bore to produce synthesis gas. A backpressure of the injected steam or water in the injection well bore may force the synthesis gas produced and un-reacted steam across the region. Product stream may be produced through the well bore in which oxidation fluid was injected. If the composition of the product deviates substantially from a desired composition, then steam injection may cease, and air or oxygen injection may be reinitiated.

In continuous operation, an oxidizing fluid and a synthesis gas generating fluid may be simultaneously injected at injection wells and synthesis gas produced at production wells. For example, oxygen and steam may be injected continuously in the desired ratio (e.g. 1:2 to 1:4).

### Example 1

Hydrocarbon fluids were produced from a portion of a coal containing formation by an in situ experiment conducted in a portion of a coal containing formation. The coal is high volatile bituminous C coal. It was heated with electrical heaters. The experimental field test system included at least coal containing formation within a grout wall. The coal containing formation dipped at an angle of approximately 36° with an intercepted thickness of approximately 4.9 meters. Three heat sources, two production wells and four temperature observation wells were used for within the experimental field test system. The three heat sources were disposed in a triangular configuration with a 2 m spacing on each side. One central production well was located proximate a centre of the heat source pattern and equidistant from each of the heat sources. A second outer production well was located outside the heat source pattern and spaced equidistant from the two closest heat sources. A grout wall was formed around the heat source pattern and the production wells. The grout wall included pillars to inhibit an influx of water into the portion during the in situ experiment and to substantially inhibit loss of generated hydrocarbon fluids to an unheated portion of the formation.

Temperatures were measured at various times during the experiment at each of four temperature observation wells. The formation was heated for over three months at a temperature of below 400 °C. Gas and liquid were produced from the formation via the central production well. Four barrels of oil and about 282,000 standard cubic feet of gas were produced during the pyrolysis stage. The total barrels of oil equivalent during the pyrolysis stage was 31.5 BOE. The entire pyrolysis stage lasted for 134 days.

Subsequently, synthesis gas was produced in the portion of the coal containing formation. In this experiment, heater wells were also configured to inject and produce fluids. Synthesis gas production was started after an energy input of approximately 77,000 kW.h. The average coal temperature in the pyrolysis region during synthesis gas generation was about 620 °C. Approximately 243,000 standard cubic feet of gas were produced during the synthesis gas generating stage. The total barrels of oil equivalent produced during the syngas stage was 6.9 BOE. The amount of useable energy contained in the produced synthesis gas was less than that contained in the pyrolysis fluids. Synthesis gas production is less energy efficient than pyrolysis for two reasons. First, the synthesis gas reaction products have a lower energy content than the low carbon number hydrocarbons produced in pyrolysis. Second, the endothermic synthesis gas reaction consumes energy.

Synthesis gas may be generated in a formation at a synthesis gas generating temperature before the injection of water or steam due to the presence of natural water inflow into hot coal formation. Natural water may come from below the formation. In the experimental field test, the maximum natural water inflow was approximately 5 kg/h. Water was injected at rates of about 2.7 kg/h, 5.4 kg/h, and 11 kg/h, respectively, into the central production well. Production of synthesis gas is at the three heater wells. The synthesis gas production per unit volume of water injected was constant at total water inflow above 7.7 kg/h, and began to decrease at approximately 2.7 kg/h of injected water or 7.7 kg/h of total water inflow. The reason for the decrease is that steam was flowing too fast through the coal seam to reach reaction equilibrium with the formation, indicating that the injected water is in reaction equilibrium with the formation to about 2.7 kg/hr of injected water or 7.7 kg/h of total water inflow.

A second run corresponds to injection of steam at one heater well, and production of additional gas at the central production well. The second run results in substantially the same amount of additional synthesis gas produced. Again, at higher injection rates the production starts to deviate from equilibrium because the residence time is insufficient for the additional water to react with the coal. As temperature is increased, a greater amount of additional synthesis gas is produced for a given injected water rate. The reason is that at higher temperatures the reaction rate and conversion of water into synthesis gas increases.

Table I includes the composition of synthesis gas producing during a run of the in situ coal field experiment.

**Table I**

| Component | Mol% | Wt% |
|---|---|---|
| Methane | 12.263 | 12.197 |
| Ethane | 0.281 | 0.525 |
| Ethene | 0.184 | 0.320 |
| Acetilene | 0.000 | 0.000 |
| Propane | 0.017 | 0.046 |
| Propilene | 0.026 | 0.067 |
| Propadiene | 0.001 | 0.004 |
| Isobutane | 0.001 | 0.004 |
| n-Butane | 0.000 | 0.001 |
| 1-Butene | 0.001 | 0.003 |
| Isobutene | 0.000 | 0.000 |
| cis-2-Butene | 0.005 | 0.018 |
| trans-2-Butene | 0.001 | 0.003 |
| 1,3-Butadiene | 0.001 | 0.005 |
| Isopentane | 0.001 | 0.002 |
| n-Pentane | 0.000 | 0.002 |
| Pentene-1 | 0.000 | 0.000 |
| T-2-Pentene | 0.000 | 0.000 |
| 2-Methyl-2-Butene | 0.000 | 0.000 |
| C-2-Pentene | 0.000 | 0.000 |
| Hexanes | 0.081 | 0.433 |
| H₂ | 51.247 | 6.405 |
| Carbon monoxide | 11.556 | 20.067 |
| Carbon dioxide | 17.520 | 47.799 |
| Nitrogen | 5.782 | 10.041 |
| Oxygen | 0.955 | 1.895 |
| Hydrogen sulphide | 0.077 | 0.163 |
| Total | 100.000 | 100.000 |

The experiment was performed in batch mode at about 620 °C heating being supplied by electric heaters. The presence of nitrogen and oxygen is due to contamination of the sample with air. The mole percent of H₂, carbon monoxide, and carbon dioxide, neglecting the composition of all other species, may be determined for the above data. For example, mole percent of H₂, carbon monoxide, and carbon dioxide may be increased proportionally such that the mole percentages of the three components equal approximately 100%. In this manner, the mole percent of H₂, carbon monoxide, and carbon dioxide, neglecting the composition of all other species, is 63.8%, 14.4%, and 21.8%, respectively. The methane is believed to come primarily from the pyrolysis region outside the triangle of heaters.

Experiments were conducted with methane injection into the hot coal. Methane was injected into the central production wells, and fluid was produced from the three heater wells. The average temperatures measured at various wells were as follows: heater wells 746 °C, 746 °C and 767 °C, respectively, and outer and central production wells 606 °C and 769 °C, respectively. When the methane contacts the formation, it may crack within the formation to produce H₂ and coke. As the methane injection rate increases, the production of H₂ increases, indicating that methane is cracking to form H₂. Methane production is also increasing which indicates that not all of the injected methane is cracked. The measured compositions of ethane, ethene, propane, and butane were negligible. The H₂ may be used in a fuel cell to produce electrical energy. Any uncracked methane may be separated from the H₂ and reinjected into the formation.

In a separate experiment ethane was injected into the central production well and fluid was produced from the three heater wells. The average temperatures measured at various wells were as follows: heater wells 742 °C, 750 °C and 744 °C, respectively, and outer and central production wells 626 °C and 818 °C, respectively. When ethane contacts the formation, it may crack within the formation to produce H₂, methane, ethene, and coke. It was found that as the ethane injection rate increases, the production of H₂, methane, ethane, and ethene increases, indicating that ethane is cracking to form H₂ and lower molecular weight components. The flow rate of propane and propylene were unaffected by the injection of ethane.

In a separate experiment propane was injected into the central production well, and fluid was produced from heater wells. The average temperatures measured at various wells were as follows: heater wells 737 °C, 753 °C and 726 °C, respectively, outer and central production wells 606 °C and 759 °C, respectively. When propane contacts the formation, it may crack within the formation to produce H₂, methane, ethane, ethene, propylene and coke. As the propane injection rate increases, the production of H₂, methane, ethane, ethene, propane, and propylene increases, indicating that propane is cracking to form H₂ and lower molecular weight components.

In a separate experiment butane was injected into the central production well and fluid was produced from heater wells. The average temperature measured at various wells were as follows: heater wells 772 °C, 764 °C and 753 °C, respectively, and outer and central production wells 624 °C and 830 °C, respectively. When butane contacts the formation, it may crack within the formation to produce H₂, methane, ethane, ethene, propane, propylene, and coke. It was found that as the butane injection rate increases, the production of H₂, methane, ethane, ethene, propane, and propylene increases, indicating that butane is cracking to form H₂ and lower molecular weight components.

The following Table II illustrates the results from analyzing coal before and after it was treated i.e., after pyrolysis and production of synthesis gas in the field experiment as described above. The coal was cored at about 36-37 feet from the surface, midway into the coal bed, in both the "before treatment" and "after treatment" examples. Both cores were taken at about the same location. In the following Table II "FA" means Fisher Assay, "as rec'd" means the sample was tested as it was received and without any further treatment, "Py-Water" means the water produced during pyrolysis, "H/C Atomic Ratio" means the atomic ratio of hydrogen to carbon, "daf" means "dry ash free," "dmmf" means "dry mineral matter free," and "mmf" means "mineral matter free." The density of the "after treatment" core sample was approximately 0.85 g/ml whereas the density of the "before treatment" core sample was approximately 1.35 g/ml.

**Table II**

| Analysis | Before Treatment | After Treatment |
|---|---|---|
| % Vitrinite Reflectance | 0.54 | 5.16 |
| PA (gal/ton, as-rec'd) | 11.81 | 0.17 |
| FA (wt%, as rec'd) | 6.10 | 0.61 |
| FA Py-Water (gal/ton, as-rec'd) | 10.54 | 2.22 |
| H/C Atomic Ratio | 0.85 | 0.06 |
| H (wt%, daf) | 5.31 | 0.44 |
| ○ (wt%, daf) | 17.08 | 3.06 |
| N (wt%, daf) | 1.43 | 1.35 |
| Ash (wt%, as rec'd) | 32.72 | 56.50 |
| Fixed Carbon (wt%, dmmf) | 54.45 | 94.43 |
| Volatile Matter (wt%, dmmf) | 45.55 | 5.57 |
| Heating Value (Btu/lb, moist, mmf) | 12048 | 14281 |

In sum, the results shown in the above Table II demonstrate that a significant amount of hydrocarbons and hydrogen were removed during treatment of the coal by pyrolysis and generation of synthesis gas. Significant amounts of undesirable products (ash and nitrogen) remaining in the formation while the significant amounts of desirable products (e.g., condensable hydrocarbons and gas) were removed.

### Example 2

Equilibrium gas dry mole fractions for a coal reaction with water was calculated. Methane reactions are not included and coal char is assumed to be carbon. The fractions are representative of a gas produced from a hydrocarbon containing formation that has been passed through a condenser to remove water from the produced gas. Equilibrium gas dry mole fractions are calculated for H₂, carbon monoxide and carbon dioxide as a function of temperature at a pressure of 2 bar absolute. At 390 °C, liquid production tends to cease, and production of gases tends to commence. The gases produced at this temperature include about 67% H₂, and about 33% carbon dioxide. Carbon monoxide is present in negligible quantities below about 410 °C. At temperatures of about 500 °C, however, carbon monoxide is present in the produced gas in measurable quantities. For example, at 500 °C, about 66.5% H₂, about 32% carbon dioxide, and about 2.5% carbon monoxide are present. At 700 °C, the produced gas includes about 57.5% H₂, about 15.5% carbon dioxide, and about 27% carbon monoxide.

Equilibrium wet mole fractions for a coal reaction with water were calculated. Equilibrium wet mole fractions are shown for water, H₂, carbon monoxide, and carbon dioxide as a function of temperature at a pressure of 2 bar absolute. At 390 °C, the produced gas includes about 89% water, about 7% H₂, and about 4% carbon dioxide. At 500 °C, the produced gas includes about 66% water, about 22% H₂, about 11% carbon dioxide, and about 1% carbon monoxide. At 700 °C, the produced gas include about percent 18% water, about 47.5% H₂, about 12% carbon dioxide, and about 22.5% carbon monoxide.

These calculations illustrate that at the lower end of the temperature range at which synthesis gas may be produced (i.e., about 400 °C) equilibrium gas phase fractions may not favour production of H₂ from hydrocarbons and steam. As temperature increases, the equilibrium gas phase fractions increasingly favour the production of H₂. For example, the gas phase equilibrium wet mole fraction of H₂ increases from about 9% at 400 °C to about 39% at 610 °C and reaches 50% at about 800 °C. The calculations further illustrate that at temperatures greater than about 660 °C, equilibrium gas phase fractions tend to favour production of carbon monoxide over carbon dioxide. They also illustrate that as the temperature increases from between about 400 °C to about 1000 °C, the H₂ to carbon monoxide ratio of produced synthesis gas may continuously decrease throughout this range. For example, the equilibrium gas phase H₂ to carbon monoxide ratio at 500 °C, 660 °C, and 1000 °C is about 22:1, about 3:1, and about 1:1, respectively. Produced synthesis gas at lower temperatures may have a larger quantity of water and carbon dioxide than at higher temperatures. As the temperature increases, the overall percentage of carbon monoxide and hydrogen within the synthesis gas may increase.

Other methods of producing synthesis gas were successfully demonstrated at the experimental field test. These included continuous injection of steam and air, steam and oxygen, water and air, water and oxygen, steam, air and carbon dioxide. All these injections successfully generated synthesis gas in the hot coke formation.

## Claims

1. A method for the production of a gas from a hydrocarbon-containing subterranean formation comprising:
providing heat to at least a portion of the subterranean formation such that at least a part of the heated portion reaches the pyrolysis temperature of hydrocarbons, yielding pyrolysis products;
collecting pyrolysis products from the subterranean formation over a prolonged period of time; and subsequently injecting a fluid into the heated part of the formation, resulting in the production of a reaction product by reaction of the fluid with carbonaceous material remaining in the formation;
**characterized in that** the fluid is a synthesis gas generating fluid, which is reacted with the heated part at a temperature in the range of 400 °C to 1200 °C to produce synthesis gas having a H₂ to CO ratio related to the temperature.

2. Method according to claim 1, in which the synthesis gas generating fluid is water and/or carbon dioxide.

3. Method according to claim 1 or 2, in which additional heat is added to the formation prior to or during synthesis gas generation.

4. Method according to any one of claims 1 to 3, in which the synthesis gas generating fluid comprises a mixture including steam and oxygen.

5. Method according to any one of claims 1 to 4, in which the pressure ranges from atmospheric pressure to the lithostatic pressure of the formation.

6. Method according to any one of claims 1 to 5, in which the synthesis gas generating fluid includes water, produced by pyrolysis.

7. Method according to any one of claims 1 to 6, in which the synthesis gases recovered are converted to heavier condensable hydrocarbons a Fischer-Tropsch hydrocarbon synthesis.

8. Method according to any one of claims 1 to 7, in which the hydrocarbon-containing formation contains kerogen.

9. Method according to claim 8, in which the hydrocarbon-containing formation contains kerogen with a vitrinite reflectance of 0.2% to 3.0%.

10. Method according to any preceding claim, wherein the formation is heated by one or more heat sources that are arranged in one or more heat injection wells.

11. Method according to any preceding claim, wherein the composition of the produced synthesis gas is monitored and the heating and/or input of synthesis gas generating fluid is controlled to maintain the composition of the produced synthesis gas within a desired range.

12. Method according to any preceding claim, wherein during the production of synthesis gas the formation is heated to a temperature between 600 °C and 1000 °C.

13. Method according to any proceding claim, wherein during the production of synthesis gas a pressure in the formation is maintained between 2 and 80 bar, preferably between 5 and 60 bar.

## Patentansprüche

1. Verfahren zur Herstellung eines Gases aus einer Kohlenwasserstoffe enthaltenden unterirdischen Formation, umfassend:
Zuführen von Wärme zu wenigstens einem Abschnitt der unterirdischen Formation in solcher Weise, daß wenigstens ein Teil des erhitzten Abschnittes die Pyrolysetemperatur von Kohlenwasserstoffen erreicht, unter Ausbildung von Pyrolyseprodukten;
Gewinnen von Pyrolyseprodukten aus der unterirdischen Formation über einen längeren Zeitraum; und
anschließendes Injizieren eines Fluids in den erhitzten Teil der Formation, was zur Ausbildung eines Reaktionsproduktes durch Umsetzung des Fluids mit in der Formation verbliebenem kohlenstoffhältigen Material führt;
**dadurch gekennzeichnet, daß** das Fluid ein Synthesegas generierendes Fluid ist, das mit dem erhitzten Teil bei einer Temperatur im Bereich von 400°C bis 1.200°C umgesetzt wird, um Synthesegas mit einem der Temperatur entsprechenden H₂/CO-Verhältnis auszubilden.

2. Verfahren nach Anspruch 1, worin das Synthesegas generierende Fluid Wasser und/oder Kohlendioxid ist.

3. Verfahren nach Anspruch 1 oder 2, worin vor oder während der Synthesegasbildung zusätzliche Wärme der Formation zugeführt wird.

4. Verfahren nach einem der Ansprüche 1 bis 3, worin das Synthesegas generierende Fluid ein Dampf und Sauerstoff einschließendes Gemisch umfaßt.

5. Verfahren nach einem der Ansprüche 1 bis 4, worin der Druck von Atmosphärendruck bis zum lithostatischen Druck der Formation reicht.

6. Verfahren nach einem der Ansprüche 1 bis 5, worin das Synthesegas generierende Fluid durch Pyrolyse produziertes Wasser einschließt.

7. Verfahren nach einem der Ansprüche 1 bis 6, worin die gewonnenen Synthesegase in einer Fischer-Tropsch-Kohlenwasserstoffsynthese zu schwereren kondensierbaren Kohlenwasserstoffen umgewandelt werden.

8. Verfahren nach einem der Ansprüche 1 bis 7, worin die Kohlenwasserstoffe enthaltende Formation Kerogen enthält.

9. Verfahren nach Anspruch 8, worin die Kohlenwasserstoffe enthaltende Formation Kerogen mit einer Vitrinitreflexion von 0,2% bis 3,0% enthält.

10. Verfahren nach einem der vorstehenden Ansprüche, worin die Formation durch eine oder durch mehrere Heizquellen erhitzt wird, die in einer oder in mehreren Hitzeinjektionsbohrungen angeordnet sind.

11. Verfahren nach einem der vorstehenden Ansprüche, worin die Zusammensetzung des produzierten Synthesegases überwacht wird und das Erhitzen und/oder das Einbringen von Synthesegas generierendem Fluid derart geregelt wird bzw. werden, daß die Zusammensetzung des gebildeten Synthesegases innerhalb eines gewünschten Bereiches gehalten wird.

12. Verfahren nach einem der vorstehenden Ansprüche, worin während der Produktion von Synthesegas die Formation auf eine Temperatur zwischen 600°C und 1.000°C erhitzt wird.

13. Verfahren nach einem der vorstehenden Ansprüche, worin während der Produktion von Synthesegas ein Druck in der Formation zwischen 2 und 80 bar, vorzugsweise zwischen 5 und 60 bar aufrechterhalten wird.

## Revendications

1. Procédé de production d'un gaz à partir d'une formation souterraine contenant des hydrocarbures comprenant :
l'apport de chaleur à au moins une fraction de la formation souterraine de telle sorte qu'au moins une partie de la fraction chauffée atteigne la température de pyrolyse des hydrocarbures, en donnant des produits de pyrolyse;
la collecte des produits de pyrolyse de la formation souterraine sur une période de temps prolongée; et
ensuite l'injection d'un fluide dans la partie chauffée de la formation, conduisant à la production d'un produit de réaction par réaction du fluide avec de la matière carbonée restant dans la formation;
**caractérisé en ce que** le fluide est un fluide générateur de gaz de synthèse, qui est amené à réagir avec la partie chauffée à une température allant de 400°C à 1200°C pour produire un gaz de synthèse ayant un rapport H₂ à CO lié à la température.

2. Procédé suivant la revendication 1, dans lequel le fluide générateur de gaz de synthèse est de l'eau et/ou du dioxyde de carbone.

3. Procédé suivant l'une ou l'autre des revendications 1 et 2, dans lequel de la chaleur additionnelle est ajoutée à la formation avant ou pendant la génération de gaz de synthèse.

4. Procédé suivant l'une quelconque des revendications 1 à 3, dans lequel le fluide générateur de gaz de synthèse comprend un mélange comprenant de la vapeur et de l'oxygène.

5. Procédé suivant l'une quelconque des revendications 1 à 4, dans lequel la pression va de la pression atmosphérique à la pression lithostatique de la formation.

6. Procédé suivant l'une quelconque des revendications 1 à 5, dans lequel le fluide générateur de gaz de synthèse comprend de l'eau, produite par pyrolyse.

7. Procédé suivant l'une quelconque des revendications 1 à 6, dans lequel les gaz de synthèse récupérés sont convertis en hydrocarbures condensables plus lourds par une synthèse d'hydrocarbures de Fischer-Tropsch.

8. Procédé suivant l'une quelconque des revendications 1 à 7, dans lequel la formation contenant des hydrocarbures contient du kérogène.

9. Procédé suivant la revendication 8, dans lequel la formation contenant des hydrocarbures contient du kérogène avec un pouvoir réflecteur de la vitrinite de 0,2% à 3,0%.

10. Procédé suivant l'une quelconque des revendications précédentes, dans lequel la formation est chauffée par une ou plusieurs sources de chaleur qui sont agencées dans un ou plusieurs puits d'injection de chaleur.

11. Procédé suivant l'une quelconque des revendications précédentes, dans lequel la composition du gaz de synthèse produit est contrôlée et le chauffage et/ou l'alimentation en fluide générateur de gaz de synthèse sont contrôlés pour maintenir la composition du gaz de synthèse produit dans une gamme désirée.

12. Procédé suivant l'une quelconque des revendications précédentes, dans lequel pendant la production de gaz de synthèse, la formation est chauffée à une température entre 600°C et 1000°C.

13. Procédé suivant l'une quelconque des revendications précédentes, dans lequel pendant la production de gaz de synthèse, une pression dans la formation est maintenue entre 2 et 80 bars, avantageuse ment entre 5 et 60 bars.
